# EUROPÄISCHE PATENTSCHRIFT

(11) **EP 4 082 846 B1**
(45) Veröffentlichungstag und Bekanntmachung des Hinweises auf die Patenterteilung: **11.10.2023**
(21) Anmeldenummer: 21171465.4
(22) Anmeldetag: 30.04.2021
(51) Int. Cl.: B60T 13/68, F16K 11/044, F16K 31/06, F16K 27/02, F16K 31/12, F16K 1/42, F15B 13/043, B60T 15/02, F16K 31/42, F16K 31/40

(54) **DRUCKLUFTANLAGEN-PILOTVENTIL**
COMPRESSED AIR PILOT VALVE
SOUPAPE PILOTE DE L'INSTALLATION D'AIR SOUS PRESSION

(43) Veröffentlichungstag der Anmeldung: 02.11.2022
(73) Patentinhaber: Haldex Brake Products Aktiebolag, 261 24 Landskrona (SE)
(72) Erfinder: Heer, Siegfried, 69168 Wiesloch (DE)
(74) Vertreter: REHBERG HÜPPE + PARTNER

(56) Entgegenhaltungen:
- CN-Y- 201 083 216
- DE-A1-102016 006 009
- US-A- 4 531 547
- US-A1- 2003 183 289

## Beschreibung

### TECHNISCHES GEBIET DER ERFINDUNG

Die Erfindung betrifft ein Druckluftanlagen-Pilotventil für eine Druckluftanlage eines Nutzfahrzeugs. Des Weiteren betrifft die Erfindung Druckluftanlagen-Pilotventile unterschiedlicher Bauart.

### STAND DER TECHNIK

DE 10 2004 009 157 A1 offenbart ein direkt gesteuertes Druckluftanlagen-Magnetventil, welches über ein Aktuatormodul und ein Ventilsitzmodul verfügt. In dem Aktuatormodul betätigt ein elektromagnetischer Aktuator unmittelbar einen als Ventilteller ausgebildeten Ventilkörper. Der Ventilkörper wirkt zusammen mit einem Ventilsitz, der von dem Ventilsitzmodul ausgebildet ist. Das Gehäuse des Aktuatormoduls kann in eine Aufnahme des Gehäuses des Ventilsitzmoduls eingesetzt werden. Das Gehäuse des Aktuatormoduls verfügt über nasenartige Vorsprünge, die Schneidkanten ausbilden. Die Vorsprünge mit den Schneidkanten werden eingepresst in eine Aufnahme des Ventilsitzmoduls, womit sich die nasenartigen Vorsprünge mit den Schneidkanten in das Gehäuse des Ventilsitzmoduls einformen. Hierdurch soll eine fixierende Klemm-Schneidkanten-Verbindung geschaffen werden, wobei infolge des Einsatzes der Klemm-Schneidkanten-Verbindung keine zusätzlichen Dichtungsmittel zwischen den Gehäusen des Aktuatormoduls und des Ventilsitzmoduls erforderlich sein sollen.

Der nächstliegende Stand der Technik DE 10 2017 107 456 A1 offenbart ein Druckluftanlagen-Pilotventil mit einem Steuermodul und einem Ventilmodul, wobei das Steuermodul zur elektropneumatischen Vorsteuerung des Ventilmoduls dient. Das Steuermodul und das Ventilmodul sind über eine verschraubte Flanschverbindung miteinander verbunden.

Weiterer Stand der Technik ist aus US 4 531 547 A, CN 201 083 216 Y, US 2003/183289 A1 und DE 10 2016 006 009 A1 bekannt,

### AUFGABE DER ERFINDUNG

Der Erfindung liegt die Aufgabe zugrunde, ein Druckluftanlagen-Pilotventil vorzuschlagen, welches für einen Einsatz in einer Druckluftanlage eines Nutzfahrzeugs (hier insbesondere eines Zugfahrzeugs oder eines Anhängers) ausgebildet und bestimmt ist und insbesondere hinsichtlich
- der modularen Gestaltung und/oder
- der gleiche Anteile für unterschiedliche Druckluftanlagen-Pilotventile und/oder
- der Vereinfachung der Montage und/oder
- der Vermeidung einer unbeabsichtigten Demontage und/oder
- der Abstützung der Module desselben aneinander und/oder
- der Berücksichtigung der Fertigungstoleranzen
verbessert ist.

Des Weiteren liegt der Erfindung die Aufgabe zugrunde, eine Gruppe von Druckluftanlagen-Pilotventilen unterschiedlicher Bauart hinsichtlich des Fertigungsaufwands, des Aufwands für die Belieferung und/oder Bevorratung und/oder einer modularen Gestaltung zu verbessern.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Das erfindungsgemäße Druckluftanlagen-Pilotventil ist für eine Steuerung von Druckluft zuständig und kann eine beliebige Anzahl von Anschlüssen und/oder Stellungen aufweisen. Hierbei ist das Druckluftanlagen-Pilotventil bestimmt für eine Druckluftanlage eines Nutzfahrzeugs (wobei das Nutzfahrzeug beispielsweise als Zugfahrzeug oder Anhänger ausgebildet sein kann.

Das erfindungsgemäße Druckluftanlagen-Pilotventil verfügt über ein Ventilmodul. Das Ventilmodul weist ein Ventilmodul-Gehäuseteil, einen Ventilkörper und ein Ventilelement auf. Der Ventilkörper kann relativ zu dem Ventilelement unterschiedliche Ventilstellungen einnehmen. In den unterschiedlichen Ventilstellungen werden unterschiedliche Verbindungen zwischen den Anschlüssen des Druckluftanlagen-Pilotventils geschaffen und/oder es erfolgt ein Absperren oder Freigeben mindestens eines Anschlusses. Die unterschiedlichen Ventilstellungen des Ventilmoduls steuern somit unmittelbar die pneumatischen Verhältnisse an den Anschlüssen des Druckluftanlagen-Pilotventils.

Darüber hinaus verfügt das Druckluftanlagen-Pilotventil über ein Steuermodul. Das Steuermodul weist ein Steuermodul-Gehäuseteil, einen elektromagnetischen Aktuator, einen von dem elektromagnetischen Aktuator betätigten Steuerventilkörper und ein Steuerventilelement auf. In Abhängigkeit von der elektrischen Beaufschlagung des Aktuators können der Steuerventilkörper und das Steuerventilelement unterschiedliche relative Steuerstellungen einnehmen. In den unterschiedlichen Steuerstellungen steuert das Steuermodul unterschiedliche Steuerdrücke aus. Im einfachsten Fall ist das Steuermodul als 3/2-Magnetventil ausgebildet mit einem mit einer Entlüftung verbundenen Entlüftungsanschluss, einem mit einer Druckluftquelle verbundenen Belüftungsanschluss und einem Steueranschluss. In einer Steuerstellung, nämlich einer Belüftungsstellung, verbindet das Steuermodul den Belüftungsanschluss mit dem Steueranschluss, während der Entlüftungsanschluss abgesperrt ist. Hingegen verbindet das Steuermodul in der anderen Steuerstellung, nämlich eine Entlüftungsstellung, den Steueranschluss mit dem Entlüftungsanschluss, während der Belüftungsanschluss abgesperrt ist.

Grundsätzlich können/kann das von dem Steuermodul ausgebildete Ventil und/oder das von dem Ventilmodul ausgebildete Ventil in beliebiger Bauart ausgebildet sein, insbesondere als Schieberventil oder als Sitzventil. Bei Ausgestaltung als Schieberventil ist der Steuerventilkörper bzw. der Ventilkörper als Steuerschieber ausgebildet oder mit diesem gekoppelt und das Steuerventilelement ist als nicht bewegte Steuerbohrung mit Steuerkanten ausbildenden Kanälen oder Querbohrungen ausgebildet. Für die Ausbildung als Sitzventil ist insbesondere der Steuerventilkörper als Ventilteller oder Ventilstößel ausgebildet, der in Wechselwirkung tritt mit einem von dem Steuerventilelement ausgebildeten Ventilsitz.

Das Ventilmodul ist durch das Steuermodul pneumatisch vorgesteuert. Hierzu wird der Steuerdruck an dem Steueranschluss des Steuermoduls an das Ventilmodul übertragen. Wird über eine veränderte elektrische Beaufschlagung des elektromagnetischen Aktuators eine veränderte Steuerstellung des Steuermoduls herbeigeführt, führt dies zu einer veränderten Ventilstellung des Ventilmoduls. Dies soll im Folgenden anhand eines nicht beschränkenden Beispiels erläutert werden:
Ist der Ventilkörper des Ventilmoduls als in Richtung einer ersten Ventilstellung federbeaufschlagter Ventilschieber oder Ventilteller ausgebildet und ist das Ventilelement ein an dem Ventilmodul-Gehäuseteil fest angeordneter oder von diesem ausgebildeter Ventilsitz oder eine Steuerbohrung, nimmt das Ventilmodul in der Entlüftungsstellung des Steuermoduls die erste Ventilstellung ein. Der in der Belüftungsstellung des Steuermoduls erzeugte Steuerdruck kann auf eine Kolben- oder Stirnfläche des Steuerschiebers oder eines mit einem Ventilteller gekoppelten Steuerkolbens oder eine anderweitige Steuerfläche einwirken, um entgegen der Beaufschlagung durch die Feder den Ventilkörper in die zweite Ventilstellung zu überführen.

Erfindungsgemäß ist das Steuermodul-Gehäuseteil an dem Ventilmodul-Gehäuseteil befestigt.

Erfindungsgemäß wird vorgeschlagen, dass in einem Druckluftanlagen-Pilotventil der erläuterten Bauart eine Bajonett-Verbindung eingesetzt wird. Eine Bajonett-Verbindung ermöglicht eine einfache Montage und Demontage der Verbindung. Beispielsweise kann die Montage und/oder Demontage der Bajonett-Verbindung ohne ein Werkzeug wie einen Schraubendreher erfolgen. Für eine Bajonett-Verbindung sind auch keine zusätzlichen Verbindungselemente wie Schrauben, Sicherungsbolzen u. ä. erforderlich, so dass unter Umständen die Bauteilvielfalt verringert wird. Hinzu kommt, dass unter Umständen über eine Bajonett-Verbindung Flanschsegmente eines Verbindungsteils der Bajonett-Verbindung, die Eingriff finden in Umfangsausnehmungssegmenten des Gegen-Verbindungsteils der Bajonett-Verbindung, mit einem großen radialen Abstand von der Montage-Drehachse der Bajonett-Verbindung angeordnet sind, womit eine Abstützung mit einem großen Hebelarm gewährleistet ist. Des Weiteren kann der Formschluss zwischen den Flanschsegmenten und den Umfangsausnehmungssegmenten eine große Abstützfläche bereitstellen und es kann die Übertragung großer Abstützkräfte erfolgen, womit sich eine steife Abstützung und Verbindung ergibt und kleine Flächenpressungen an den Flanschsegmenten und Umfangsausnehmungssegmenten gewährleistet werden können.

Erfindungsgemäß ist über die Bajonett-Verbindung das Steuerventilelement an dem Steuermodul-Gehäuse gehalten. In diesem Fall ist die Bajonett-Verbindung in einem Innenraum angeordnet, der von dem Steuermodul-Gehäuseteil und dem Ventilmodul-Gehäuseteil begrenzt ist. Mit der Montage des Steuerventilelements über die Bajonett-Verbindung an dem Steuermodul-Gehäuseteil (mit hierin montiertem elektromagnetischem Aktuator und hieran angeordnetem, von dem Aktuator betätigtem Steuerventilkörper) ist eine Montageteileinheit gebildet, die dann mit dem Ventilmodul montiert werden kann. Da die Bajonett-Verbindung in dem Innenraum des Gehäuses des Druckluftanlagen-Pilotventils angeordnet ist, kann kein unerwünschtes oder widerrechtliches Lösen der Verbindung von außen erfolgen.

Die Nutzung des Steuermoduls zur Vorsteuerung des Ventilmoduls kann insbesondere vorteilhaft genutzt werden für eine Luftmengenverstärkung, bei der eine Steuerung großer Drücke oder Volumenströme bei kleiner Baugröße des Druckluftanlagen-Pilotventils und kleiner Baugröße des Steuermoduls mit kleiner Leistungsaufnahme des elektrischen Aktuators möglich ist.

Die Erfindung umfasst Ausführungsformen, bei welchen ausschließlich die Steuerung der Ventilstellungen des Ventilmoduls über die Ansteuerung durch das Steuermodul erfolgt. Die Erfindung umfasst aber auch Ausführungsformen, bei denen das Ventilmodul auch auf andere Weise gesteuert werden kann. So kann beispielsweise bei einem Druckluftanlagen-Pilotventil, welches als Hebe-Senk-Ventil ausgebildet ist, eine Ventilstellung von dem Benutzer manuell über einen Betätigungshebel oder einen Betätigungsschieber herbeigeführt und geändert werden. In einem derartigen Fall kann dann mittels der Steuerung durch das Steuermodul die Gewährleistung von Zusatzfunktionen erfolgen. Für das vorgenannte Beispiel eines Hebe-Senk-Ventils kann mittels des Steuermoduls eine sogenannte Reset-to-Ride-Funktion gewährleistet werden, welche nach einem manuellen Verstellen des Niveaus des Chassis des Nutzfahrzeugs beispielsweise an einer Rampe mittels des Hebe-Senk-Ventils und einer Wiederaufnahme des Fahrbetriebs das Hebe-Senk-Ventil automatisch in Stellung Fahrt überführt, in welcher die manuell vorgegebene Niveauhöhe verlassen wird und die Niveauregelung über ein mechanisches oder elektronisches Niveauregelventil erfolgt. Möglich ist aber auch, dass zusätzlich zu der Steuerung des Ventilmoduls über das Steuermodul eine mechanische Steuerung desselben möglich ist.

Vorzugsweise ist die Bajonett-Verbindung in einem Innenraum angeordnet, der von dem Steuermodul-Gehäuseteil und dem Ventilmodul-Gehäuseteil begrenzt ist. Möglich ist hierbei, dass der Innenraum multifunktional ist, indem in diesem mindestens ein Ventilelement des Ventilmoduls angeordnet ist.

Für einen weiteren Vorschlag der Erfindung weist das Steuerventilelement einen Ventilsitz auf, der mit dem Steuerventilkörper in Wechselwirkung tritt. Das auf diese Weise gebildete Ventil, bei dem der Steuerventilkörper in den unterschiedlichen Ventilstellungen unterschiedliche Abstände von dem Ventilsitz hat, kann damit die zuvor erläuterte Montageteileinheit bilden.

Für einen weiteren Vorschlag der Erfindung verfügt das Ventilmodul-Gehäuseteil über eine Ausnehmung. In die Ausnehmung ist das Steuermodul-Gehäuseteil, insbesondere die zuvor erläuterte Montageteileinheit mit dem Steuermodul, einsetzbar. Hierbei gewährleistet der Formschluss der Ausnehmung mit dem Steuermodul-Gehäuseteil eine exakte Ausrichtung des Steuermodul-Gehäuseteils zu dem Ventilmodul-Gehäuseteil und eine gute Abstützung von Haltemomenten und/oder Haltekräften. Möglich ist auch, dass zwischen der Ausnehmung des Ventilmodul-Gehäuseteils und des Steuermodul-Gehäuseteils eine Abdichtung erfolgt, wobei im Bereich der Kontaktflächen auch Dichtelemente angeordnet sein können. Gleichzeitig kann die Ausnehmung des Ventilmodul-Gehäuseteils aber auch eine wichtige Komponente des Ventilmoduls bereitstellen oder aufnehmen, indem in der Ausnehmung der Ventilkörper angeordnet ist und/oder von der Ausnehmung das Ventilelement ausgebildet ist oder die Ausnehmung das Ventilelement hält. Die Ausnehmung ist damit multifunktional genutzt, was den Fertigungsaufwand reduziert und zu einer kompakten Ausgestaltung führen kann.

In einem Druckluftanlagen-Pilotventil sind beispielsweise zur Gewährleistung der gewünschten Durchlassquerschnitte, der Sperrstellung und/oder der erforderlichen Dichtigkeit unter Umständen enge Toleranzen für die Abmessungen der Komponenten und die relative Lage der Komponenten einerseits des Steuermoduls und andererseits des Ventilmoduls erforderlich. Ein Toleranzausgleich kann für den Fall, dass das Steuermodul-Gehäuseteil in das Ventilmodul-Gehäuseteil eingeschraubt wird, durch die Wahl des Einschraubwinkels erfolgen. Ist das Steuermodul an das Ventilmodul angeflanscht oder an dieses an- oder eingesetzt, kann ein Toleranzausgleich durch Ausgleichselemente wie Passscheiben oder durch unterschiedlich dicke Dichtelemente zwischen den Flanschen erfolgen. Ein derartiger Toleranzausgleich ist für eine herkömmliche Bajonett-Verbindung nicht ohne Weiteres möglich, da durch die Bajonett-Verbindung die relative axiale Lage des Verbindungsteils der Bajonett-Verbindung und des Gegen-Verbindungsteils der Bajonett-Verbindung fest vorgegeben ist. Insbesondere für diesen Fall schlägt die Erfindung vor, dass Komponenten des Steuermoduls über ein Toleranzausgleichselement an dem Steuermodul-Gehäuseteil abgestützt sind. Bei diesen Komponenten kann es sich beispielsweise um einen Kern des elektromagnetischen Aktuators und/oder einer Ankerhülse handeln. Über das Toleranzausgleichselement können dann Toleranzen der Baulängen der genannten Komponenten in Richtung der Montageachse der Bajonett-Verbindung ausgeglichen werden. Auch Toleranzen bei der Wechselwirkung der Komponenten zwischen dem Steuermodul und dem Ventilmodul können auf diese Weise ausgeglichen werden. Das Toleranzausgleichselement ist insbesondere als elastisches Abstützelement ausgebildet, wobei das elastische Abstützelement eine elastische Abstützung in Richtung der Montageachse der Bajonett-Verbindung gewährleistet.

Für einen weiteren Vorschlag der Erfindung ist das Toleranzausgleichselement multifunktional ausgebildet und eingesetzt, in den dieses gleichzeitig als Dichtelement wirkt. So kann beispielsweise über das Toleranzausgleichselement ein Entlüftungskanal abgedichtet werden, der zwischen einem Joch und einem Kern des elektromagnetischen Aktuators gebildet wird.

Gemäß einem weiteren Vorschlag der Erfindung ist über eine weitere Bajonett-Verbindung das Steuermodul-Gehäuseteil an dem Ventilmodul-Gehäuseteil befestigt. Während gemäß dem Stand der Technik der Vorsteuerung dienende Steuermodule ausschließlich flanschartig mit dem Ventilmodul verschraubt wurden, setzt die Erfindung erstmals eine Bajonett-Verbindung für diese Verbindung ein.

Möglich ist auch, dass mindestens eine der genannten Bajonett-Verbindungen im Bereich der Flanschsegmente eine Schrägfläche aufweist und/oder im Bereich der Umfangsausnehmungssegmente, in denen die Flanschsegmente aufgenommen sind, eine Schrägfläche mit entsprechendem Neigungswinkel aufweist. Infolge dieser Schrägflächen ist über eine Veränderung eines relativen Montagewinkels der Bajonett-Verbindung, also eine Veränderung der Relativstellung der Flanschsegmente gegenüber den Umfangsausnehmungssegmenten, eine axiale Relativlage zwischen dem Steuerventilelement und dem Steuermodul-Gehäuseteil veränderbar. Über den Einsatz der Schrägfläche und die Veränderung der axialen Relativlage kann beispielsweise eine Anpassung an etwaige Toleranzen erfolgen und/oder eine Vorgabe einer Anpresskraft eines Toleranzausgleichselements und/oder eines Dichtelements und/oder eine Feineinstellung einer Steuerstellung bzw. Ventilstellung erfolgen. Möglich ist insbesondere, dass je nach Relativlage die Anpresskraft des Steuerventilkörpers an einen Steuerventilsitz zwecks Gewährleistung der erforderlichen Abdichtung in der Sperrstellung vorgegeben wird. Grundsätzlich möglich ist, dass die Montagestellung einer Bajonett-Verbindung nur dadurch gesichert ist, dass eine Selbsthemmung infolge der Reibung in der Bajonett-Verbindung zwischen den Flanschsegmenten und den Umfangssegmenten auftritt. Ist eine zusätzliche Sicherung der Montagestellung der Bajonett-Verbindung gewünscht, kann dieser über eine Sicherungseinrichtung gesichert werden. Diese Sicherungseinrichtung kann beispielsweise
- eine Verstemmung sein,
- ein eingebrachter Blockadekörper, der eine relative Verdrehung der Flanschsegmente gegenüber den Umfangsausnehmungssegmenten der Bajonett-Verbindung in Demontagerichtung blockiert, oder
- eine beliebige Rast- oder Sperrverbindung sein.

Im Rahmen der Erfindung kann die Sicherungseinrichtung ausschließlich eine End- oder Montagestellung sichern. Möglich ist aber auch, dass die Sicherungseinrichtung zwei oder mehr Montagestellungen sichern kann. Hierbei können beispielsweise stufenlos oder in Stufen unterschiedliche Montagewinkel der Bajonett-Verbindung gesichert werden.

Ein weiterer Aspekt der Erfindung betrifft die Ausgestaltung des Steuermodul-Gehäuseteils und des Ventilmodul-Gehäuseteils. Für einen Vorschlag weisen diese jeweils einen Gehäuseteil-Innenraum auf, wobei die Gehäuseteil-Innenräume jeweils eine Öffnung aufweisen. Die Gehäuseteil-Innenräume bilden dann gemeinsam den zuvor genannten Innenraum des Druckluftanlagen-Pilotventils. Hierbei sind die Gehäuseteil-Innenräume über die vorgenannten Öffnungen miteinander verbunden. In dem derart gebildeten Innenraum können dann das Steuerventilelement, der Steuerventilkörper, der bewegliche Anker, der elektromagnetische Kern, der Ventilkörper und/oder das Ventilelement angeordnet sein.

Die Komponenten des Druckluftanlagen-Pilotventils können auf beliebige Weise, beispielsweise mittels Fräsens, Gießens, Spritzens, MIM u. ä. hergestellt sein, wobei für die einzelnen Komponenten gleiche oder unterschiedliche Herstellungsverfahren verwendet werden können und/oder gleiche oder unterschiedliche beliebige Materialien verwendet werden können. Vorzugsweise sind die Komponenten mit oder aus Metall, beispielsweise Aluminium, Magnesium oder Stahl hergestellt. Möglich ist auch der Einsatz beliebiger Verbundmaterialien oder Materialgemische.

Für einen besonderen Vorschlag der Erfindung sind Komponenten, insbesondere das Steuermodul-Gehäuseteil und/oder das Ventilmodul-Gehäuseteil und/oder das Ventilelement und/oder der Ventilkörper, zumindest teilweise aus Kunststoff hergestellt. Hierbei können die mittels der Bajonett-Verbindung verbundenen Komponenten aus Kunststoff hergestellt sein. Die Bajonett-Verbindung ermöglicht dann eine großflächige Krafteinleitung und -übertragung zwischen den Komponenten, was der unter Umständen verringerten mechanischen Festigung des Kunststoffs Rechnung trägt und wodurch unter Umständen erster Einsatz von Kunststoff als Werkstoff für diese Komponenten möglich gemacht wird. Durchaus möglich ist dabei, dass hochfeste Kunststoffe und/oder Kunststoffe mit einer Faserverstärkung und/oder verstärkenden Partikeln und/oder Verbundwerkstoffe mit Kunststoff eingesetzt werden. Möglich ist beispielsweise auch, dass aus oder mit Kunststoff hergestellte Komponenteninserts, beispielsweise zur Ausbildung von Gewinden oder Aufnahmen für Bolzen, metallische Gleit- oder Aufnahmehülsen oder andere Teilkomponenten aus anderen Materialien aufweisen, die beispielsweise in einen Grundkörper aus Kunststoff eingegossen sein können.

Im Rahmen der Erfindung kann das Druckluftanlagen-Pilotventil für ein beliebiges elektropneumatisch vorgesteuertes Ventil einer Druckluftanlage eines Nutzfahrzeugs, insbesondere einer Luftfederungsanlage oder einer Druckluftbremsanlage des Nutzfahrzeugs, eingesetzt werden.

Für einen Vorschlag der Erfindung ist das Druckluftanlagen-Pilotventil ein Liftachsventil einer Luftfederungsanlage eines Nutzfahrzeugs. Hierbei kann beispielsweise das Ventilmodul des Liftachsventils die pneumatische Beaufschlagung einer Liftbalgs und eines Tragbalgs einer Liftachse in an sich bekannter Weise direkt steuern. Mittels des Steuermoduls kann dann eine Veränderung der Ventilstellung des Ventilmoduls gesteuert werden. Vorzugsweise ist in diesem Fall das Ventilmodul in Schieberbauart ausgebildet, wobei dann der von dem Steuermodul ausgesteuerte Steuerdruck die pneumatische Beaufschlagung einer Stirnfläche oder einer Steuerfläche des Steuerschiebers steuern kann.

Für einen anderen Vorschlag der Erfindung ist das Druckluftanlagen-Pilotventil als Hebe-Senk-Ventil für eine Luftfederungsanlage eines Nutzfahrzeugs ausgebildet. Bei einem derartigen Hebe-Senk-Ventil kann das Ventilmodul beispielsweise Stellungen Heben, Senken, Stopp und Fahrt aufweisen. In der Stellung Heben werden die Luftfederbälge der Luftfederung mit einer Druckluftquelle verbunden, um das Niveau des Chassis anzuheben. In der Stellung Senken werden die Luftfederbälge der Luftfederung mit einer Druckluftsenke oder Entlüftung verbunden, um das Niveau des Chassis zu senken. In der Stellung Stopp werden die Luftfederbälge der Luftfederung abgesperrt. In der Stellung Fahrt werden die Luftfederbälge der Luftfederung über ein mechanisch oder elektronisch gesteuertes Niveauregelventil mit der Druckluftquelle oder der Entlüftung verbunden, wobei das Niveauregelventil dann auch eine Sperrstellung aufweisen kann. Soll der Benutzer beispielsweise an einer Rampe zum Be- und Entladen des Nutzfahrzeugs manuell die Niveauhöhe des Chassis an die Höhe der Rampe anpassen können, kann der Benutzer manuell das Hebe-Senk-Ventil aus der Stellung Fahrt in die Stellungen Heben, Senken und Stopp überführen. Das Steuermodul kann in diesem Fall dazu dienen, pneumatisch das Hebe-Senk-Ventil mit einer Wiederaufnahme des Fahrbetriebs oder der Beendigung dies Beoder Entladens wieder in die Stellung Fahrt zu überführen (sogenannte "Reset-to-Ride-Funktion", s. o.). Selbstverständlich sind aber auch andere Ausgestaltungen des Hebe-Senk-Ventils von der vorliegenden Erfindung umfasst.

Möglich ist auch, dass das Druckluftanlagen-Pilotventil als (Anhänger-)Bremsventil, als Ventil für eine Luftfederung oder als Steuerventil für eine pneumatische Ansteuerung eines pneumatischen Aktuators einer Drosselklappe für ein Nutzfahrzeug ausgebildet ist.

Ein besonderer Vorschlag der Erfindung schlägt vor, dass eine Gruppe von Druckluftanlagen-Pilotventilen unterschiedlicher Bauart von einem Unternehmen hergestellt und/oder von einem Unternehmen angeboten und/oder von einem Unternehmen bevorratet wird. Obwohl die Druckluftanlagen-Pilotventile eine unterschiedliche Bauart aufweisen, sind diese sämtlich so ausgebildet, wie dies zuvor erläutert worden ist. Dabei sind erfindungsgemäß in den Druckluftanlagen-Pilotventilen der unterschiedlichen Bauarten baugleiche Steuermodule vorhanden. Hingegen können beispielsweise die Ventilmodule unterschiedlich ausgebildet sein. Hierdurch kann der Anteil der Gleichteile erhöht werden, was den Aufwand für die Herstellung und die Bevorratung deutlich reduziert. Um lediglich ein Beispiel zu nennen, kann für ein Hebe-Senk-Ventil einerseits und ein Liftachsventil andererseits dasselbe Steuermodul Einsatz finden. Die Besonderheiten für die Anwendung als Hebe-Senk-Ventil einerseits und als Liftachsventil andererseits können dann in den unterschiedlichen Ausgestaltungen der Ventilmodule berücksichtigt werden.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisch einen Ausschnitt einer Druckluftanlage mit einem Druckluftanlagen-Pilotventil, in dem einen Vorsteuerung eines Ventilmoduls durch ein Steuermodul erfolgt.
- **Fig. 2**: zeigt in einem schematischen Teillängsschnitt ein Druckluftanlagen-Pilotventil.
- **Fig. 3, 4**: zeigen in einem Teilschnitt ein Steuermodul-Gehäuseteil eines Druckluftanlagen-Pilotventils, wobei Fig. 3 einen Querschnitt und Fig.4 eine Vorderansicht zeigt.
- **Fig. 5, 6**: zeigen ein Steuerventilelement eines Druckluftanlagen-Pilotventils gemäß Fig. 2, wobei Fig. 5 eine Vorderansicht und Fig. 6 eine Ansicht von oben zeigt.
- **Fig. 7**: zeigt die Verbindung des Steuerventilelements gemäß Fig. 5 und 6 mit einem Steuermodul-Gehäuseteil gemäß Fig. 3 und 4 in einer Seitenansicht.
- **Fig. 8**: zeigt in einem schematischen Teillängsschnitt eine weitere Ausführungsform eines Druckluftanlagen-Pilotventils.
- **Fig. 9, 10**: zeigen ein Steuermodul-Gehäuseteil des Druckluftanlagen-Pilotventils gemäß Fig. 8, wobei Fig. 9 eine Seitenansicht und Fig. 10 eine Ansicht von unten zeigt.
- **Fig. 11, 12**: zeigen ein Steuerventilelement eines Druckluftanlagen-Pilotventils gemäß Fig. 8, wobei Fig. 11 eine Vorderansicht und Fig. 12 eine Ansicht von oben zeigt.
- **Fig. 13, 14**: zeigen eine alternative Ausgestaltung eines Steuermodul-Gehäuseteils, wobei Fig. 13 eine Vorderansicht und Fig. 14 eine Ansicht von unten zeigt.
- **Fig. 15, 16**: zeigen eine alternative Ausgestaltung eines Steuerventilelements, wobei Fig. 15 eine Vorderansicht und Fig. 16 eine Ansicht von oben zeigt.
- **Fig. 17, 18**: zeigen eine Montageteileinheit, die mit dem Steuermodul-Gehäuseteil gemäß Fig. 13 und 14 sowie dem Steuerventilelement gemäß Fig. 15 und 16 gebildet ist, wobei Fig. 17 eine Vorderansicht und Fig. 18 eine Ansicht von unten zeigt.

### FIGURENBESCHREIBUNG

In der vorliegenden Anmeldung wird für Bauelemente, welche sich hinsichtlich der Geometrie und/oder Funktion zumindest teilweise entsprechen, teilweise dasselbe Bezugszeichen verwendet. Treten für ein Ausführungsbeispiel dieselben Komponenten mehrfach auf, wird für diese teilweise dasselbe Bezugszeichen verwendet.

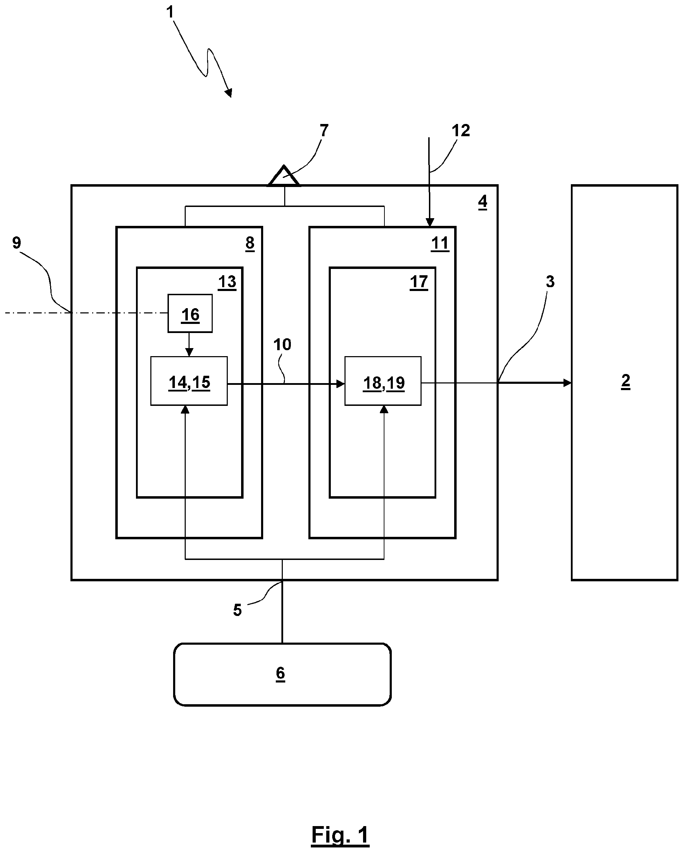

Fig. 1 zeigt stark schematisiert einen Ausschnitt einer Druckluftanlage 1 eines Nutzfahrzeugs, bei der es sich um eine Luftfederungsanlage oder eine Bremsanlage des Nutzfahrzeugs handeln kann. Die Druckluftanlage 1 verfügt über einen Verbraucher 2, insbesondere pneumatische Bremskreise oder Luftfederbälge einer Luftfederungsanlage. Die pneumatische Beaufschlagung der Verbraucher 2 erfolgt über mindestens einen Anschluss 3 eines Druckluftanlagen-Pilotventils 4. Exemplarisch ist hier dargestellt, dass das Druckluftanlagen-Pilotventil über einen Anschluss 5 mit einer Druckluftquelle, hier einen Vorratsbehälter 6, mit Druckluft versorgt wird, und einen entlüftenden Anschluss 7 aufweist.

Das Druckluftanlagen-Pilotventil 4 verfügt über ein Steuermodul 8, welches zur Druckluftversorgung mit dem Anschluss 5 sowie zur Entlüftung mit dem Anschluss 7 verbunden ist. Ein elektrischer Steueranschluss 9 ermöglicht eine elektrische Beaufschlagung eines elektromagnetischen Aktuators 16 des Steuermoduls 8. Das Steuermodul 8 erzeugt in Abhängigkeit des elektrischen Signals an dem elektrischen Steueranschluss 9 einen Steuerdruck, der über einen Steuerkanal 10 an ein Ventilmodul 11 übertragen wird. Ventilstellungen des Ventilmoduls 11 können einerseits beeinflusst werden durch ein Betätigungssignal 12. Beispielsweise kann das Betätigungssignal 12 durch eine mechanische Kopplung des Ventilkörpers des Ventilmoduls 11 mit einem Achskörper mit einer Übertragung einer Einfederung des Achskörpers oder durch ein manuell von dem Benutzer über einen Betätigungshebel oder einen Betätigungsschieber vorgegebenes Betätigungssignal erzeugt werden. So kann beispielsweise das Betätigungssignal 12 ein manuelles Verstellen eines Betätigungshebels eines Hebe-Senk-Ventils für die Herbeiführung eines manuellen Hebens und/oder Senkens des Fahrzeugaufbaus erzeugt werden. In Abhängigkeit von dem Druck in dem Steuerkanal 10, also der Steuerstellung des Steuermoduls 8, einerseits und des Betätigungssignals 12 andererseits wechselt das Ventilmodul 11 seine Ventilstellung und beeinflusst damit die Druckverhältnisse an dem Anschluss 3 sowie in dem Verbraucher 2. Die elektrische Ansteuerung des Steuermoduls 8 über den Steueranschluss 9 erfolgt mittels einer Steuereinheit oder ECU oder mittels eines elektrischen Tasters oder Schalters. Für das Beispiel der Ausgestaltung des Druckluftanlagen-Pilotventils 4 als Hebe-Senk-Ventil wird der elektrische Steueranschluss 9 durch die Steuereinheit angesteuert, um die Reset-to-Ride-Funktion herbeizuführen. Für die Ausgestaltung des Druckluftanlagen-Pilotventils 4 als Liftachsventil kann mittels der Ansteuerung des Steueranschlusses 9 gezielt die Liftachse angehoben oder abgesenkt werden, womit beispielsweise eine reine lastabhängige Aktivierung und Deaktivierung der Liftachse aufgehoben werden kann oder elektronisch die Aktivierung der Liftachse gesteuert oder geregelt werden kann.

In dem Steuermodul 8 verfügt ein Steuerteil 13 über einen Steuerventilkörper 14, der beispielsweise als Steuerschieber oder Ventilteller ausgebildet sein kann. Des Weiteren verfügt der Steuerteil 13 über ein Steuerventilelement 15, bei dem es sich um einen mit dem Steuerventilkörper zusammenwirkenden Ventilsitz oder eine Aufnahmebohrung mit Steuerbohrungen oder Steuerkanten für den Ventilschieber handeln kann. Die unterschiedlichen Steuerstellungen des Steuermoduls 8 werden durch unterschiedliche Relativstellungen des Steuerventilkörpers 14 und des Steuerventilelements 15 herbeigeführt, die wiederum durch elektrische Beaufschlagung des Aktuators 16 des Steuermoduls 8 entsprechend der elektrischen Beaufschlagung des Anschlusses 9 herbeigeführt werden.

Das Ventilmodul 11 verfügt über ein Ventilteil 17 welches einen Ventilkörper 18, insbesondere einen Ventilteller oder einen Ventilschieber, und ein Ventilelement, insbesondere einen Ventilsitz oder eine Aufnahmebohrung mit Steuerbohrungen oder Steuerkanten für den Ventilschieber, aufweist. Je nach Relativstellung des Ventilkörpers 18 und des Ventilelements 19 erfolgt eine Beeinflussung des Druckes an dem Anschluss 3. Die Veränderung der Relativstellung erfolgt hier einerseits abhängig von dem Druck in dem Steuerkanal 10 und andererseits abhängig von dem Betätigungssignal 12.

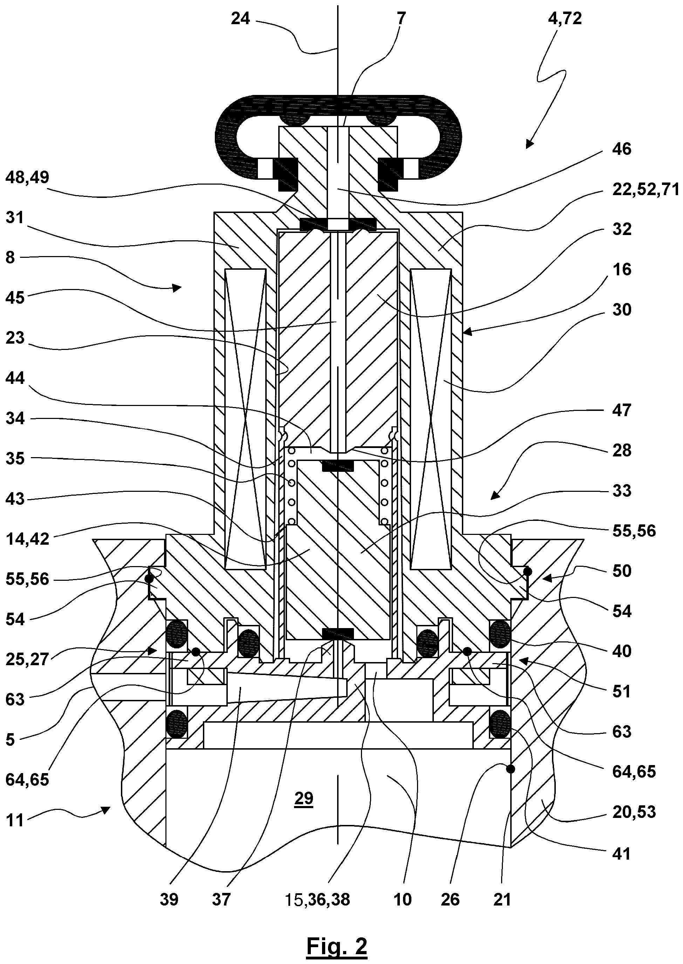

Gemäß **Fig. 2** verfügt das Ventilmodul 11 über ein Ventilmodul-Gehäuseteil 20. Das Ventilmodul-Gehäuseteil 20 weist eine Ausnehmung 21 auf. Die Ausnehmung 21 kann sich durch das gesamte Ventilmodul-Gehäuseteil 20 hindurch erstrecken oder als Sack-Ausnehmung ausgebildet sein. Vorzugsweise ist die Ausnehmung 21 als Bohrung oder Ausfräsung ausgebildet, wobei die Ausnehmung 21 insbesondere abgestuft ist.

In die Ausnehmung 21 ist das Steuermodul 8 eingesetzt, womit einerseits eine Abdichtung und andererseits eine Befestigung erfolgt. Das Steuermodul 8 verfügt über ein Steuermodul-Gehäuseteil 22. Das Steuermodul-Gehäuseteil 22 weist einen Gehäuseteil-Innenraum 23 auf, welcher in Richtung einer Montageachse 24 eine Öffnung 25 aufweist. Die Ausnehmung 21 des Ventilmodul-Gehäuseteils 20 bildet einen Gehäuseteil-Innenraum 26 aus, der eine Öffnung 27 aufweist, die in Richtung der Montageachse 24 in Richtung des Steuermoduls 8 orientiert ist. Das Ventilmodul-Gehäuseteil 20 und das Steuermodul-Gehäuseteil 22 bilden ein gemeinsames Gehäuse 28 mit einem Innenraum 29, der mit den Gehäuseteil-Innenräumen 23, 26, die über die Öffnungen 25, 27 miteinander verbunden sind, gebildet ist.

In dem Steuermodul 8 verfügt der Aktuator 16 über eine Spule 30, ein Joch 31 und einen Kern 32, der nicht in Abhängigkeit von der elektrischen Beaufschlagung des Aktuators 16 und in Abhängigkeit von den Steuerstellungen bewegbar ist, sondern nach der Montage ortsfest angeordnet ist. Des Weiteren verfügt der Aktuator 16 über einen entsprechend der Bestromung des Aktuators 16 in die unterschiedlichen Steuerstellungen bewegbaren Anker 33. In dem Aktuator 16 bildet sich in an sich bekannter Weise bei elektrischer Bestromung der Spule 30 ein magnetische Ringfluss aus. Dieser kann verstärkt werden durch eine Ankerhülse 34, die an einer Stirnseite des Kerns befestigt ist und im Inneren unter Ermöglichung einer Relativbewegung den Anker 33 aufnimmt und führt. Der Anker 33 ist durch eine Feder 35 in Richtung der in Fig. 2 wirksamen Steuerstellung beaufschlagt, die einer Entlüftungsstellung entspricht. Für das dargestellte Ausführungsbeispiel ist ein Federfußpunkt der Feder 35 an dem Kern 32 abgestützt, während der andere Federfußpunkt der Feder 35 an dem Anker 33 (hier einem Absatz des Ankers 33) abgestützt ist. In der in Fig. 2 dargestellten Steuerstellung ist die Feder 35 vorgespannt.

Das Steuermodul 8 verfügt über ein Steuerventilelement 36, welches hier als Steuerventilsitz 37 ausgebildet ist. Das Steuerventilelement 36 ist Bestandteil eines Bajonettelements 38. Das Bajonettelement weist einen Belüftungskanal 39 auf. Der Belüftungskanal 39 ist über Dichtelemente 40, 41 verbunden mit einem belüftenden Anschluss 5 des Druckluftanlagen-Pilotventils 4, hier des Ventilmodul-Gehäuseteils 20. Der Belüftungskanal 39 führt zu dem Steuerventilsitz 37. Abseits des Steuerventilsitzes 37 bildet das Bajonettelement 38 des Weiteren einen Abschnitt des Steuerkanals 10 aus, der in die Ausnehmung 21 mündet, die damit einen anderen Abschnitt des Steuerkanals 10 bildet.

Der Anker 33 bildet den Steuerventilkörper 42. Der Steuerventilkörper 42 liegt infolge der vorgespannten Feder 35 und ohne Bestromung der Spule 30 unter Abdichtung an dem Steuerventilsitz 37 an. Auf diese Weise ist eine Verbindung zwischen dem Steuerkanal 10 und dem Anschluss 5 abgesperrt. In dieser Steuerstellung ist der Steuerkanal 10 über einen Ringspalt zwischen dem Anker 33 und der Ankerhülse 34, einem axialen Zwischenraum 43 zwischen dem Anker 33 und der Ankerhülse 34, einem axialen Zwischenraum 44 zwischen dem Anker 33 und dem Kern 32, eine Durchgangsbohrung 45 des Kerns 32 und eine Durchgangsbohrung 46 des Steuermodul-Gehäuseteils 22 mit dem entlüftenden Anschluss 7 verbunden. Der Steuerkanal 10 ist somit entlüftet.

Der Aktuator 16 nimmt mit der Bestromung der Spule 30 die in Fig. 2 nicht dargestellte Steuerstellung ein. In dieser belüftenden Steuerstellung hat sich der Anker 33 entgegen der Beaufschlagung durch die Feder 35 in Richtung des Kerns 32 bewegt, bis der von dem Anker 33 gebildete Steuerventilkörper 42 den Steuerventilsitz 37 freigibt und andererseits der von dem Anker 33 gebildete Steuerventilkörper 42 einen eingangsseitig der Durchgangsbohrung 45 gebildeten Steuerventilsitz 47 verschließt. In dieser belüftenden Steuerstellung schließt die Anpressung des Steuerventilkörpers 42 an den Steuerventilsitz 47 des Kerns 32 die Verbindung zu dem entlüftenden Anschluss 7 ab, während der Steuerventilsitz 37 geöffnet wird, so dass ein Übertritt von Druckluft von dem Anschluss 5 zu dem Steuerkanal 10 möglich ist. Es liegt somit ein Steuerdruck an dem Steuerkanal 10 an.

Wie in Fig. 2 zu erkennen ist, erfolgt die Abdichtung zwischen dem Steuermodul 8 und dem Ventilmodul-Gehäuseteil 20 über zwei in Richtung der Montageachse 24 beabstandete Dichtelemente 40, 41, die hier als Dichtringe, insbesondere O-Ringe ausgebildet sind. Hierbei ist das außenliegende Dichtelement 40 in radialer Richtung zwischen dem Steuermodul-Gehäuseteil 22 und dem Ventilmodul-Gehäuseteil 20 verspannt. Das andere Dichtelement 41 ist radial zwischen dem Steuerventilelement 36 und dem Ventilmodul-Gehäuseteil 20 verspannt.

Eine Abstützung des Kerns 32 in Richtung der Montageachse 24 an dem Steuermodul-Gehäuseteil 22 erfolgt über ein Dichtelement 48, welches gleichzeitig ein Toleranzausgleichselement 49 bildet. Das Dichtelement 48 dichtet hierbei den Übertritt von Druckluft zwischen den Durchgangsbohrungen 45, 46 ab. In Fig. 2 ist ersichtlich, dass durch die Elastizität des Dichtelements 48 bzw. Toleranzausgleichselements 49 etwaige Fertigungstoleranzen der Längserstreckung des Kerns 32, der Längserstreckung des Ankers 33, der Relativlage des Bajonettelements 38 gegenüber dem Steuermodul-Gehäuseteil 22, der Lage des Steuerventilsitzes 37 und/oder der Längserstreckung der Ankerhülse 34 ausgeglichen werden, da je nach Fertigungsungenauigkeiten eine etwas größere oder kleinere axiale Verspannung des Dichtelements 48 erfolgen kann.

Als Besonderheit ist das Dichtelement 40 in einer Ringnut aufgenommen, deren Boden sowie seitliche Begrenzung von dem Steuermodul-Gehäuseteil 22 ausgebildet sind, während die andere seitliche Begrenzung von dem Bajonettelement 38 ausgebildet ist. Hingegen liegt das Dichtelement 41 lediglich an einer zylindrischen Mantelfläche des Bajonettelements 38 an und dieses wird infolge des wirkenden Druckes an dem Anschluss 5 seitlich an eine Ringfläche des Bajonettelements 38 angepresst, während dieses in die andere Richtung nicht formschlüssig, sondern nur durch den Druck in der Betriebsstellung gesichert ist.

Das Steuermodul-Gehäuseteil 22 ist über eine Bajonett-Verbindung 50 fest mit dem Ventilmodul-Gehäuseteil 20 verbunden.

Das Bajonettelement 38 und damit das Steuerventilelement 36 ist über eine Bajonett-Verbindung 51 mit dem Steuermodul-Gehäuseteil 22 verbunden.

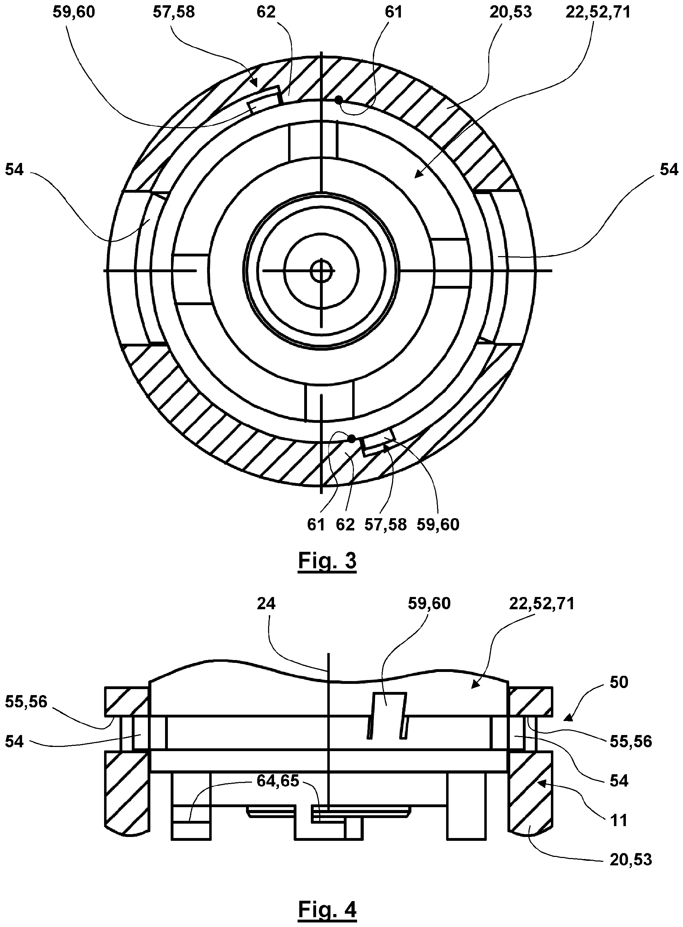

Diese Bajonett-Verbindungen 50, 51 werden im Folgenden anhand der **Fig. 3 bis 7** näher erläutert.

Für die Bajonett-Verbindung 50 bildet das Steuermodul-Gehäuseteil 22 das Bajonettelement 52, während das Ventilmodul-Gehäuseteil 20 das Gegen-Bajonettelement 53 dieser Bajonett-Verbindung 50 bildet. Das Steuermodul-Gehäuseteil 22 bildet die Flanschsegmente 54 aus, die kreisringsegmentförmig von der Mantelfläche des Steuermodul-Gehäuseteils 22 vorstehen, in Fig. 3 in einer 3-Uhr-Ausrichtung sowie 9-Uhr-Ausrichtung orientiert sind und sich über einen Umfangswinkel im Bereich von 40 bis 80°, insbesondere 50 bis 70°, erstrecken.

Das Ventilmodul-Gehäuseteil 20 bildet auf gegenüberliegenden Seiten jeweils eine Bajonettausnehmung 55 aus, die bei Abwicklung der Begrenzungsfläche der Ausnehmung 21 L-förmig ausgebildet ist. Der Vertikalschenkel des L, der ein Axialausnehmungssegment bildet, erstreckt sich dabei parallel zur Montageachse 24, während der Horizontalschenkel des L, der ein Umfangsausnehmungssegment 56 bildet, in Umfangsrichtung um die Montageachse 24 orientiert ist. Das Axialausnehmungssegment dient einem axialen Einführen des Bajonettelements 52 in das Gegen-Bajonettelement 53 in Richtung der Montageachse 24, während die Umfangssegmentausnehmung 56 dem Verriegeln des Bajonettelements 52 mit dem Gegen-Bajonettelement 53 durch eine Verdrehung um die Montageachse 24 dient.

Für die Montage der Bajonett-Verbindung 50 wird das Steuermodul-Gehäuseteil 22 (vorzugsweise mit dem bereits daran montierten Bajonettelement 38) mit einer Fügerichtung entlang der Montageachse 24 in das Ventilmodul-Gehäuseteil 20 eingesetzt, womit die Flanschsegmente 54 in die vertikalen Schenkel des L der Bajonettausnehmungen 55 eintreten. Dies erfolgt in Fig. 3 bei Ausrichtung der Flanschsegmente 54 (abweichend zu der in Fig. 3 dargestellten Betriebsstellung) in einer 5-Uhr-Stellung sowie einer 11-Uhr-Stellung.

Hieran anschließend wird das Steuermodul-Gehäuseteil 22 gegen den Uhrzeigersinn verdreht, bis die Flanschsegmente 54, wie in Fig. 3 dargestellt, in der 3-Uhr-Stellung sowie 9-Uhr-Stellung angeordnet sind. Die Flanschsegmente 54 treten dabei in die Umfangsausnehmungssegmente 56 ein. Während der erstgenannten axialen Einführbewegung entlang der Montageachse 24 kommt die Stirnseite der Ankerhülse 34 zur Anlage an eine Stirnfläche des Bajonettelements 38 und es wird eine Anpressung des Kerns 32 an das Dicht- und Toleranzausgleichselement 48, 49 herbeigeführt.

Als optionale Besonderheit verfügt die Bajonett-Verbindung 50 über eine Sicherungseinrichtung 57. Für die dargestellte Ausführungsform ist die Sicherungseinrichtung als Rast- oder Verriegelungseinrichtung 58 ausgebildet. Die Rast- oder Verriegelungseinrichtung verfügt über ein elastisch radial nach außen beaufschlagtes Rast- oder Verriegelungselement 59. Hier ist das Rast- oder Verriegelungselement 59 als elastischer Federsteg 60 ausgebildet, der integral von dem Steuermodul-Gehäuseteil 22 ausgebildet wird. Mit dem axialen Einführen des Steuermodul-Gehäuseteils 22 in das Ventilmodul-Gehäuseteil 20 wird der Federsteg 60 nach innen elastisch verformt, so dass dieser mit der anschließenden Verdrehung in dem elastisch nach innen verformten Zustand entlang einer Innenfläche 61 des Ventilmodul-Gehäuseteils 20 gleiten kann. In der in Fig. 3 dargestellten montierten Stellung am Ende der Drehbewegung schnappt der Federsteg 60 hinter eine Stufe 62 oder Ausnehmung der Innenfläche 61. Ein Lösen der Bajonett-Verbindung 50 ist nicht ohne Weiteres möglich, da die Drehbewegung im Uhrzeigersinn in Fig. 3 dadurch blockiert wird, dass der Federsteg 60 in diese Richtung an der Stufe 62 anliegt.

Hier wird unter einer Rasteinrichtung eine Einrichtung verstanden, die ohne Zerstörung bei Aufbringung hinreichender Lösekräfte wieder gelöst werden kann. Dies wäre beispielsweise dann der Fall, wenn der Federsteg 60 im Kontaktbereich mit der Stufe 62 abgeschrägt wäre und/oder die Stufe 62 abgeschrägt wäre, so dass ein Lösemoment dazu führt, dass der Federsteg 60 radial nach innen verformt wird, womit die Demontage ermöglicht wird. Hingegen wird unter einer Verriegelungseinrichtung insbesondere eine Einrichtung verstanden, bei der eine Demontage allenfalls unter einer Zerstörung des Verriegelungselements oder mit einer separaten Betätigung des Verriegelungselements zusätzlich zu einem Lösemoment möglich ist. Dies ist beispielsweise dann der Fall, wenn, wie in Fig. 3 dargestellt, die Kontaktflächen zwischen dem Federsteg 60 und der Stufe 62 radial zu der Montageachse 24 orientiert sind.

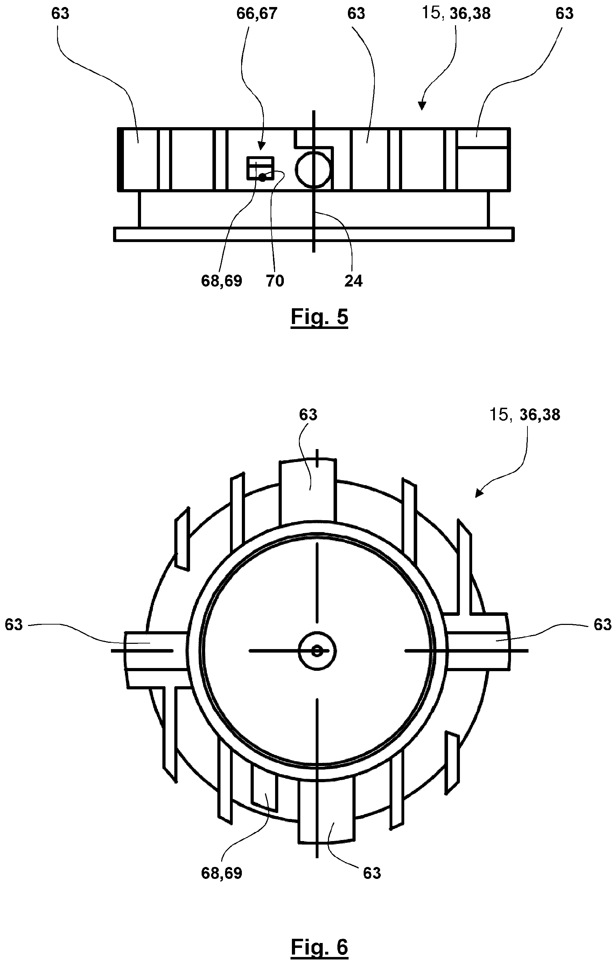

Die Bajonett-Verbindung 51 ist grundsätzlich entsprechend ausgebildet. Das Bajonettelement 38 der Bajonett-Verbindung 51 bildet dabei Flanschsegmente 63 aus, wobei gemäß Fig. 6 vier Flanschsegmente 63 vorhanden sind, die in 12-Uhr-Position, 3-Uhr-Position, 6-Uhr-Position und 9-Uhr-Position angeordnet sind. Das Steuermodul-Gehäuseteil 22 bildet vier entsprechende Bajonettausnehmungen 64 aus, die in Abwicklung ebenfalls L-förmig ausgebildet sein können. In diese treten die Flanschsegmente 63 zunächst mit einer axialen Bewegung entlang der Montageachse 24 und dann mit einer Drehbewegung um die Montageachse 24 ein. Während der Drehbewegung treten die Flanschsegmente 63 in in axialer Richtung Hinterschneidungen bildende Umfangsausnehmungssegmente 65 der Bajonettausnehmungen 64 ein.

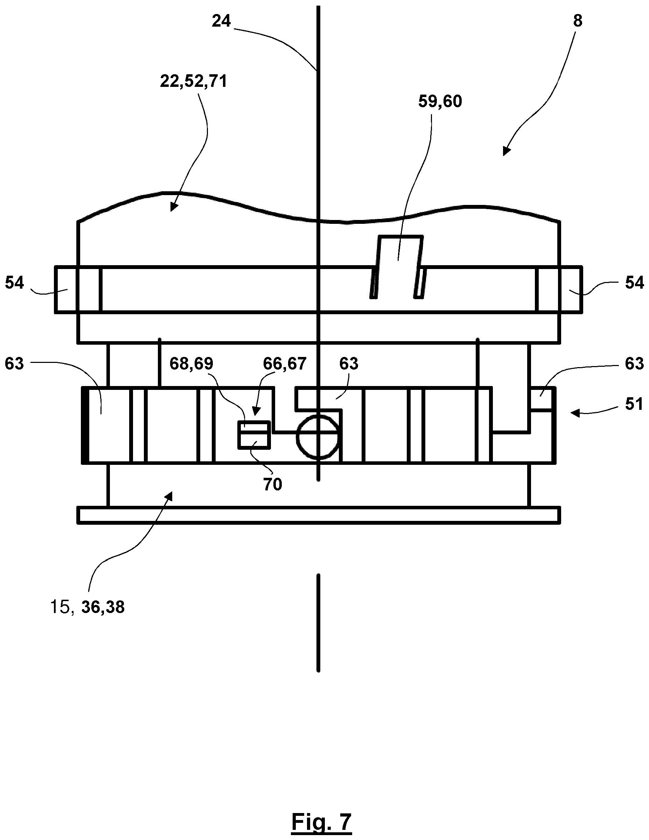

Auch für die Bajonett-Verbindung 51 ist mindestens eine Sicherungseinrichtung 66 vorhanden, die ebenfalls als Rast- oder Verriegelungseinrichtung 67 ausgebildet ist. Hier ist ein Rast- oder Verriegelungselement 68 von dem Bajonettelement 38 getragen, wobei auch hier das Rast- oder Verriegelungselement 68 als Federsteg 69 ausgebildet sein kann. Das Rast- oder Verriegelungselement rastet oder verriegelt in der montierten Stellung mit einer Rast- oder Verriegelungsausnehmung 70 des Steuermodul-Gehäuseteils 22 (vgl. Fig. 7).

Für das Bajonettelement 38 der Bajonett-Verbindung 51, welches das Steuerventilelement 36 ausbildet, bildet das Steuerventil-Gehäuseteil 22 das Gegen-Bajonettelement 71 aus.

Für das in Fig. 2 dargestellte Ausführungsbeispiel kann das Druckluftanlagen-Pilotventil 4 beispielsweise als Hebe-Senk-Ventil 72 ausgebildet sein. In diesem Fall ist an dem Steuerkanal 10 ein Steuerraum für einen Steuerkolben angeschlossen, mittels dessen eine Überführung des Ventilmoduls 20 aus einer Stellung Stopp, Heben und/oder Senken in die Stellung Fahrt erfolgen kann. Möglich ist auch, dass der Steuerkolben unmittelbar unter Abdichtung in der Ausnehmung 21 gleitend geführt ist.

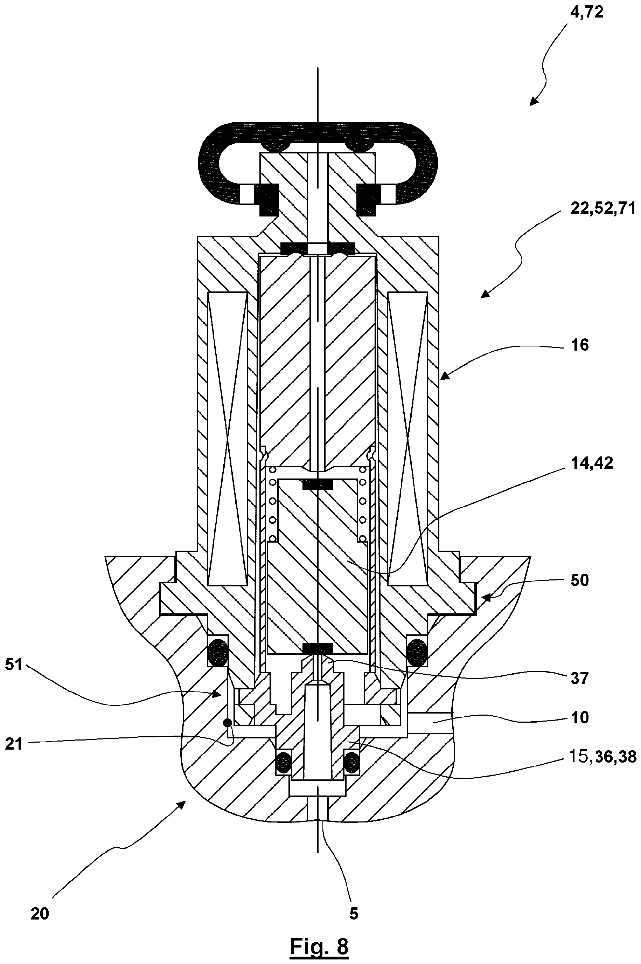

Für das in Fig. 8 dargestellt Ausführungsbeispiel ist das Steuermodul-Gehäuseteil 22 entsprechend Fig. 2 über eine Bajonett-Verbindung 50 mit dem Ventilmodul-Gehäuseteil 20 verbunden. Des Weiteren ist hier, ebenfalls entsprechend Fig. 2, das Steuerventilelement 36 über eine Bajonett-Verbindung 51 mit dem Steuermodul-Gehäuseteil 22 verbunden. In diesem Fall endet die Ausnehmung 21 unter dem Bajonettelement 38, welches das Steuerventilelement 36 ausbildet, aber mit einem Boden, in welchen ein zu dem Anschluss 5 führender Kanal mündet.

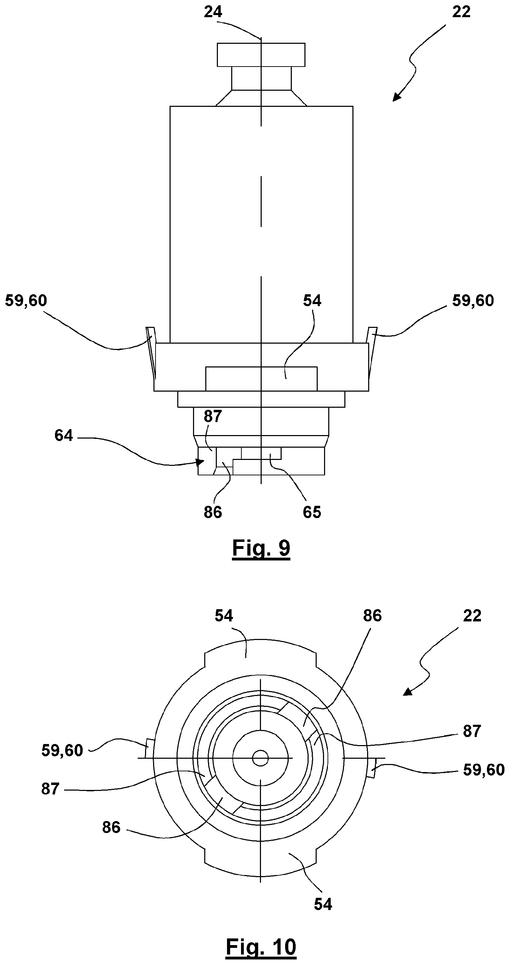

Fig. 9 zeigt das Steuermodul-Gehäuseteil 22 gemäß Fig. 8 in einer Seitenansicht, während Fig. 10 das Steuermodul-Gehäuseteil 22 in einer Ansicht von unten zeigt. Zu erkennen sind in Fig. 9 und 10 einerseits die als Federstege 60 ausgebildeten Rast- oder Verriegelungselemente 59. Des Weiteren zeigen die Fig. 9 und 10 die Flanschsegmente 54. Diesbezüglich wird auf die Beschreibung zu Fig. 2 verwiesen. Andererseits zeigt Fig. 9 die Bajonettausnehmung 64, welche hier wie beschrieben entsprechend einem (auf dem Kopf stehenden und gespiegelten) L ausgebildet ist. Die Bajonettausnehmung 64 verfügt einerseits über das Umfangsausnehmungssegment 65 und das parallel zur Montageachse 24 orientierte Axialausnehmungssegment 86.

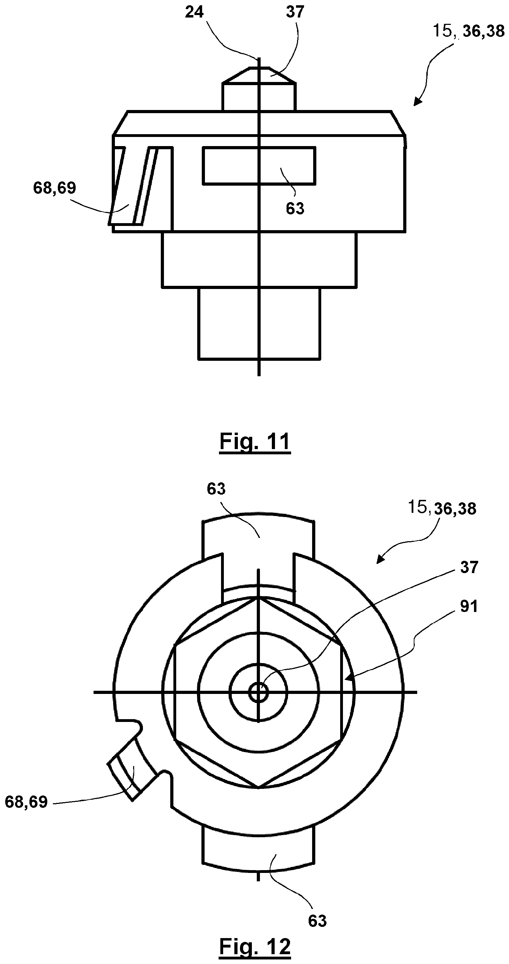

In **Fig. 11** ist das Steuerventilelement 36 gemäß Fig. 8 in einer Seitenansicht dargestellt, während dieses in **Fig. 12** in einer Ansicht von oben dargestellt ist. Zu erkennen ist hier das als Federsteg 69 ausgebildete Rast- oder Verriegelungselement 68. Die Federstege 69 verrasten oder verriegeln dabei in der zu sichernden Endstellung hinter einer Stufe 87 des Steuermodul-Gehäuseteils 22, die von der Bajonettausnehmung 64 durch die Begrenzung des Axialausnehmungssegments 86 gebildet wird.

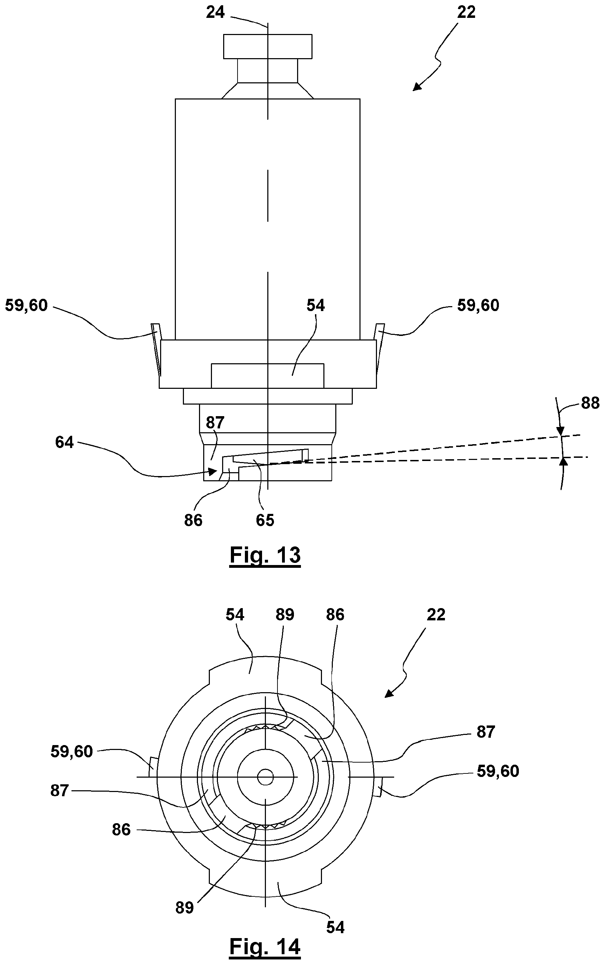

**Fig. 13 und 14** zeigen (bei entsprechender Darstellung) eine gegenüber Fig.9 und 10 geringfügig modifizierte Ausführungsform des Steuermodul-Gehäuseteils 22. Hier ist das Axialausnehmungssegment 86 nicht in einer Querebene zu der Montageachse 24 angeordnet, sondern gegenüber dieser um einen Winkel 88 geneigt. Der Winkel 88 kann beispielsweise im Bereich von 2 bis 20°, insbesondere 3 bis 15° oder 4 bis 10° liegen. Der Winkel 88 ist dabei derart gewählt, dass mit Vergrößerung des Montagewinkel des Steuerventilelements 36 das Steuerventilelement 38 weiter in das Steuermodul-Gehäuseteil 22 eintritt. Je nach Montagewinkel kann somit die relative Lage zwischen dem Steuerventilelement 36 und dem Steuermodul-Gehäuseteil 22 eingestellt werden. Insbesondere wird über den Montagewinkel die axiale Lage des Ventilsitzes 37 eingestellt, um beispielsweise die Anpressung des Steuerventilkörpers 42 an den Ventilsitz 37 in der Entlüftungsstellung einzustellen. Zu erkennen ist, dass eine Innenfläche des Steuermodul-Gehäuseteils 22 ein Umfangszahnsegment 89 aufweist mit mehreren in Umfangsrichtung nebeneinander angeordneten Zähnen.

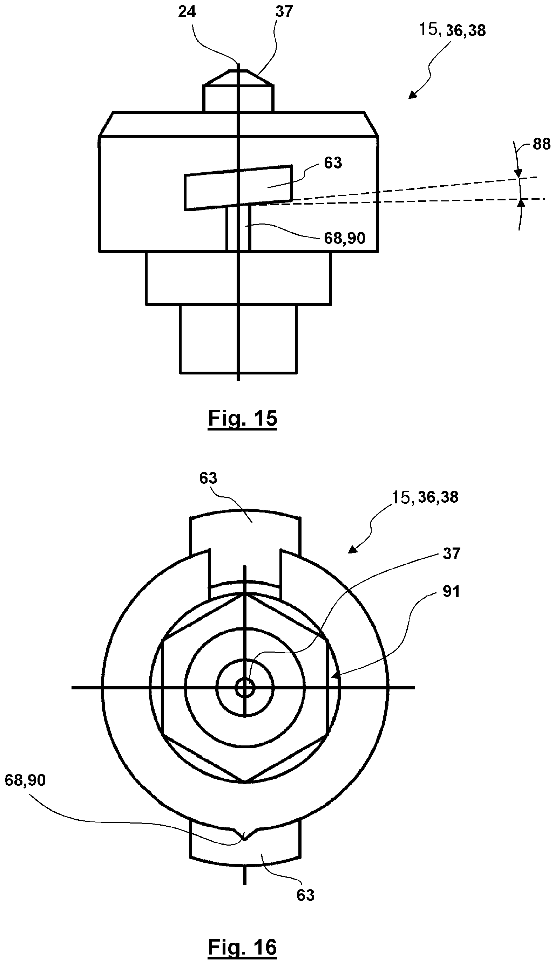

In **Fig. 15** ist zu erkennen, dass entsprechend dem Winkel 88 der Neigung des Umfangsausnehmungssegments 65 auch die Flanschsegmente 63 mit dem Winkel 88 geneigt sind.

Hier ist das Rast- oder Verriegelungselement 68 als elastische Rast- oder Verriegelungsnase 90 des Steuerventilelements 36 ausgebildet (s. **Fig. 16**).

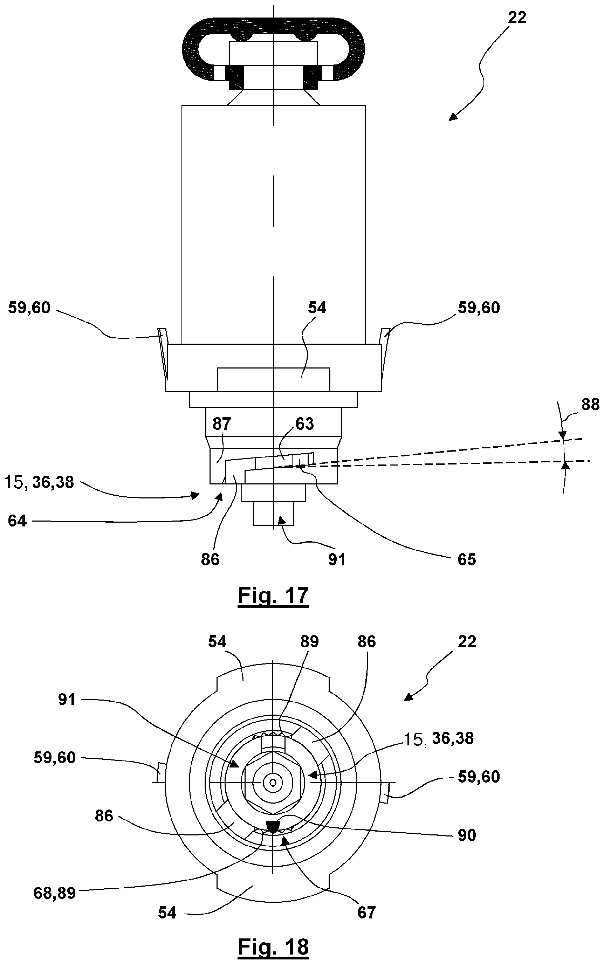

**Fig. 17 und 18** zeigen das in das Steuermodul-Gehäuseteil 22 montierte Steuerventilelement 36. Zu erkennen ist hier, dass mit dem Verändern des Montagewinkels und der Bewegung der Flanschsegmente 63 in dem geneigten Umfangsausnehmungssegment 65 ratschenartig die Rast- oder Verriegelungsnase 60 entlang des Umfangszahnsegments 69 bewegt wird. Die derart gebildete Rast- oder Verriegelungseinrichtung 67 kann somit in mehreren, durch die Zähne des das Umfangszahnsegments 89 vorgegebenen Winkelstellungen eine Sicherung gewährleisten. Somit kann eine Montage für unterschiedliche Montagewinkel erfolgen, so dass je nach Einstellung der Eindringtiefe des Steuerventilelements 36 in das Steuermodul-Gehäuseteil 22 eine Sicherung gewährleistet werden kann. Ob mittels des Eingriffs der Rast- oder Verriegelungsnase 90 in das Umfangszahnsegment 89 eine Rast- oder Verriegelungswirkung herbeigeführt wird, hängt von der Konturgebung des Umfangszahnsegments 89 und der Rast- oder Verriegelungsnase 90 ab. Sind hier die Begrenzungsflächen der Rast- oder Verriegelungsnase 90 und/oder die Zähne des Umfangszahnsegments 89 in radialer Richtung zu der Montageachse 24 orientiert, erfolgt eine Verriegelung, die nicht ohne Weiteres gelöst werden kann. Ist hingegen die Elastizität der Abstützung des Umfangszahnsegments 89 und der Rast- oder Verriegelungsnase 90 ausreichend und sind die Zähne sowie die Begrenzungsfläche der Rast-oder Verriegelungsnase 90 wie in den Fig. dargestellt abgeschrägt, kann mit einer hinreichenden Aufbringung eines Demontagemoments eine Lösen der Rast- oder Verriegelungseinrichtung 67 herbeigeführt werden.

Vorzugsweise sind/ist das Steuermodul-Gehäuseteil 22, das Ventilmodul-Gehäuseteil 20 und/oder das Steuerventilelement 36 aus Kunststoff hergestellt.

Wie in den Fig. zu erkennen ist, verfügt das Steuerventilelement 36 über eine Werkzeugangriffsfläche 91, über welche mit einem Werkzeug ein Montage- und/oder Demontagemoment auf das Steuerventilelement 36 aufgebracht werden kann. Für das dargestellte Ausführungsbeispiel ist die Werkzeugangriffsfläche 91 als Außensechskant für den Angriff eines Maulschlüssels ausgebildet.

Infolge des Winkels 88 der Flanschsegmente 63 und der Umfangsausnehmungssegmente 65 treten das Bajonettelement 38 und das Gegen-Bajonettelement 71 über Schrägflächen miteinander in Wechselwirkung.

### BEZUGSZEICHENLISTE

- 1: Druckluftanlage
- 2: Verbraucher
- 3: Anschluss
- 4: Druckluftanlagen-Pilotventil
- 5: Anschluss
- 6: Vorratsbehälter
- 7: Anschluss
- 8: Steuermodul
- 9: Steueranschluss
- 10: Steuerkanal
- 11: Ventilmodul
- 12: Betätigungssignal
- 13: Steuerteil
- 14: Steuerventilkörper
- 15: Steuerventilelement
- 16: Aktuator
- 17: Ventilteil
- 18: Ventilkörper
- 19: Ventilelement
- 20: Ventilmodul-Gehäuseteil
- 21: Ausnehmung
- 22: Steuermodul-Gehäuseteil
- 23: Gehäuseteil-Innenraum (Steuermodul-Gehäuseteil)
- 24: Montageachse
- 25: Öffnung (Steuermodul-Gehäuseteil)
- 26: Gehäuseteil-Innenraum (Ventilmodul-Gehäuseteil)
- 27: Öffnung (Ventilmodul-Gehäuseteil)
- 28: Gehäuse
- 29: Innenraum
- 30: Spule
- 31: Joch
- 32: Kern
- 33: Anker
- 34: Ankerhülse
- 35: Feder
- 36: Steuerventilelement
- 37: Steuerventilsitz
- 38: Bajonettelement (Bajonett-Verbindung 51)
- 39: Belüftungskanal
- 40: Dichtelement
- 41: Dichtelement
- 42: Steuerventilkörper
- 43: Zwischenraum
- 44: axialer Zwischenraum
- 45: Durchgangsbohrung
- 46: Durchgangsbohrung
- 47: Steuerventilsitz
- 48: Dichtelement
- 49: Toleranzausgleichselement
- 50: Bajonett-Verbindung
- 51: Bajonett-Verbindung
- 52: Bajonettelement (Bajonett-Verbindung 50)
- 53: Gegen-Bajonettelement (Bajonett-Verbindung 50)
- 54: Flanschsegment (Bajonett-Verbindung 50)
- 55: Bajonettausnehmung (Bajonett-Verbindung 50)
- 56: Umfangsausnehmungssegment (Bajonett-Verbindung 50)
- 57: Sicherungseinrichtung (Bajonett-Verbindung 50)
- 58: Rast- oder Verriegelungseinrichtung (Bajonett-Verbindung 50)
- 59: Rast- oder Verriegelungselement (Bajonett-Verbindung 50)
- 60: Federsteg (Bajonett-Verbindung 50)
- 61: Innenfläche (Bajonett-Verbindung 50)
- 62: Stufe (Bajonett-Verbindung 50)
- 63: Flanschsegment (Bajonett-Verbindung 51)
- 64: Bajonettausnehmung (Bajonett-Verbindung 51)
- 65: Umfangsausnehmungssegment (Bajonett-Verbindung 51)
- 66: Sicherungseinrichtung (Bajonett-Verbindung 51)
- 67: Rast- oder Verriegelungseinrichtung (Bajonett-Verbindung 51)
- 68: Rast- oder Verriegelungselement (Bajonett-Verbindung 51)
- 69: Federsteg (Bajonett-Verbindung 51)
- 70: Rast-oder Verriegelungsausnehmung (Bajonett-Verbindung 51)
- 71: Gegen-Bajonettelement (Bajonett-Verbindung 51)
- 72: Hebe-Senk-Ventil
- 73: Bajonett-Verbindung
- 74: Flanschsegment
- 75: Umfangsausnehmungssegment
- 76: Bajonett-Verbindung
- 77: Flanschsegment
- 78: Umfangsausnehmungssegment
- 86: Axialausnehmungssegment
- 87: Stufe
- 88: Winkel
- 89: Umfangszahnsegment
- 90: Rast- oder Verriegelungsnase
- 91: Werkzeugangriffsfläche

## Patentansprüche

1. Druckluftanlagen-Pilotventil (4) für eine Druckluftanlage (1) eines Nutzfahrzeugs
a) mit einem Steuermodul (8), welches ein Steuermodul-Gehäuseteil (22), einen elektromagnetischen Aktuator (16), einen von dem elektromagnetischen Aktuator betätigten Steuerventilkörper (14; 42) und ein Steuerventilelement (15; 36), aufweist, wobei der Steuerventilkörper (14; 42) und das Steuerventilelement (15; 36) in Abhängigkeit von der elektrischen Beaufschlagung des Aktuators (16) unterschiedliche relative Steuerstellungen einnehmen können, in denen das Steuermodul (8) unterschiedliche Steuerdrücke aussteuert, und
b) mit einem Ventilmodul (11), welches ein Ventilmodul-Gehäuseteil (20), einen Ventilkörper (18) und ein Ventilelement (19) aufweist, die unterschiedliche relative Ventilstellungen einnehmen können, in denen das Ventilmodul (11) unterschiedliche Anschlüsse miteinander verbindet und/oder sperrt,
c) wobei das Ventilmodul (11) durch das Steuermodul (8) pneumatisch vorgesteuert ist, so dass durch eine veränderte elektrische Beaufschlagung des Aktuators (16) eine veränderte Steuerstellung des Steuermoduls (8) herbeiführbar ist, über die eine veränderte Ventilstellung des Ventilmoduls (11) herbeiführbar ist,
d) wobei das Steuermodul-Gehäuseteil (22) an dem Ventilmodul-Gehäuseteil (20) befestigt ist,
**dadurch gekennzeichnet, dass**
e) eine Bajonett-Verbindung (51) vorhanden ist, über die das Steuerventilelement (15; 36) an dem Steuermodul-Gehäuseteil (22) gehalten ist.

2. Druckluftanlagen-Pilotventil (4) nach Anspruch 1, **dadurch gekennzeichnet, dass** die Bajonett-Verbindung (51) in einem Innenraum (29) angeordnet ist, der von dem Steuermodul-Gehäuseteil (22) und dem Ventilmodul-Gehäuseteil (20) begrenzt ist.

3. Druckluftanlagen-Pilotventil (4) nach Anspruch 2, **dadurch gekennzeichnet, dass** in dem Innenraum (29) auch mindestens ein Ventilelement (19) des Ventilmoduls (11) angeordnet ist

4. Druckluftanlagen-Pilotventil (4) nach einem der vorhergehenden Ansprüche, **dadurch gekennzeichnet, dass** das Steuerventilelement (15; 36) einen Steuerventilsitz (37) aufweist, der mit dem Steuerventilkörper (14; 42) in Wechselwirkung tritt.

5. Druckluftanlagen-Pilotventil (4) nach Anspruch 3 oder Anspruch 4 in Rückbeziehung auf Anspruch 3, **dadurch gekennzeichnet, dass** eine Ausnehmung (21) des Ventilmodul-Gehäuseteils (20) multifunktional ist, indem
a) in diese das Steuermodul-Gehäuseteil (22) eingesetzt ist und
b) in dieser der Ventilkörper (18) angeordnet ist und/oder von dieser das Ventilelement (19) ausgebildet ist oder in dieser das Ventilelement (19) gehalten ist.

6. Druckluftanlagen-Pilotventil (4) nach einem der vorhergehenden Ansprüche, **dadurch gekennzeichnet, dass** mindestens eine Komponente des Steuermoduls (8) über ein Toleranzausgleichselement (49) an dem Steuermodul-Gehäuseteil (22) abgestützt ist.

7. Druckluftanlagen-Pilotventil (4) nach einem der vorhergehenden Ansprüche, **dadurch gekennzeichnet, dass** das Steuermodul-Gehäuseteil (22) über eine Bajonett-Verbindung (50; 73) an dem Ventilmodul-Gehäuseteil (20) gehalten ist.

8. Druckluftanlagen-Pilotventil (4) nach einem der vorhergehenden Ansprüche, **dadurch gekennzeichnet, dass** die oder eine Bajonett-Verbindung (50; 51; 73) mindestens eine Schrägfläche aufweist, so dass über eine Veränderung eines Montagewinkels der Bajonett-Verbindung (50; 51; 73) eine axiale Relativlage
a) zwischen dem Steuerventilelement (15; 36) und dem Steuermodul-Gehäuseteil (22) und/oder
b) zwischen dem Steuermodul-Gehäuseteil (22) und dem Ventilmodul-Gehäuseteil (20) veränderbar ist.

9. Druckluftanlagen-Pilotventil (4) nach einem der vorhergehenden Ansprüche, **dadurch gekennzeichnet, dass** eine Montagestellung der oder einer Bajonett-Verbindung (50; 51; 73) über eine Sicherungseinrichtung (57) sicherbar ist.

10. Druckluftanlagen-Pilotventil (4) nach Anspruch 9, **dadurch gekennzeichnet, dass** über die Sicherungseinrichtung unterschiedliche Montagestellungen der oder einer Bajonett-Verbindung (50; 51; 73) sicherbar sind.

11. Druckluftanlagen-Pilotventil (4) nach einem der vorhergehenden Ansprüche, **dadurch gekennzeichnet, dass**
a) das Steuermodul-Gehäuseteil (22) und das Ventilmodul-Gehäuseteil (20) jeweils einen eine Öffnung (25, 27) aufweisenden Gehäuseteil-Innenraum (23, 26) aufweisen und
b) der Gehäuseteil-Innenraum (23) des Steuermodul-Gehäuseteils (22) und der Gehäuseteil-Innenraum (26) des Ventilmodul-Gehäuseteils (20) über die Öffnungen (25, 27) so verbunden sind, dass diese den Innenraum (29) bilden,
c) wobei in dem Innenraum (29)
ca) das Steuerventilelement (15; 36) und/oder
cb) der Steuerventilkörper (14; 42) und/oder
cc) ein beweglicher Anker (33) und/oder
cd) ein elektromagnetischer Kern (32) und/oder
ce) der Ventilkörper (18) und/oder
cf) das Ventilelement (19)
angeordnet sind/ist.

12. Druckluftanlagen-Pilotventil (4) nach einem der vorhergehenden Ansprüche, **dadurch gekennzeichnet, dass**
a) das Steuermodul-Gehäuseteil (22) und/oder
b) das Ventilmodul-Gehäuseteil (20) und/oder
c) das Steuerventilelement (15; 36) und/oder
d) der Steuerventilkörper (14; 42)
aus Kunststoff hergestellt sind/ist.

13. Druckluftanlagen-Pilotventil (4) nach einem der Ansprüche 1 bis 12, **dadurch gekennzeichnet, dass** das Druckluftanlagen-Pilotventil (4)
a) als Liftachsventil für eine Luftfederungsanlage eines Nutzfahrzeugs oder
b) als Hebe-Senk-Ventil (72) für eine Luftfederungsanlage eines Nutzfahrzeugs oder
c) als Bremsventil, insbesondere Anhängerbremsventil, eines Nutzfahrzeugs oder
d) als Ventil für eine Luftfederung oder
e) als Steuerventil für eine pneumatische Ansteuerung eines pneumatischen Aktuators einer Drosselklappe
ausgebildet ist.

14. Druckluftanlagen-Pilotventile (4) unterschiedlicher Bauart, **dadurch gekennzeichnet, dass**
a) die Druckluftanlagen-Pilotventile (4) unterschiedlicher Bauart jeweils nach einem der Ansprüche 1 bis 12 ausgebildet sind und
b) in den Druckluftanlagen-Pilotventilen (4) der unterschiedlichen Bauarten baugleiche Steuermodule (8) vorhanden sind.

## Claims

1. Compressed air system pilot valve (4) for a compressed air system (1) of a utility vehicle
a) comprising a control module (8) which comprises a control module housing part (22), an electro-magnetic actuator (16), a control valve body (14; 42) being actuated by the electro-magnetic actuator and a control valve element (15; 36), wherein the control valve body (14; 42) and the control valve element (15; 36) can be placed in different relative control positions dependent on the electrical bias of the actuator (16) wherein in the different relative control positions the control module (8) controls or generates different control pressures and
b) comprising a valve module (11) which comprises a valve module housing part (20), a valve body (18) and a valve element (19) which can be placed in different relative valve positions wherein the valve module (11) connects different ports to each other and/or closes different ports,
c) wherein the valve module (11) is pneumatically pilot-controlled by the control module (8) in a way such that by a changed electrical bias of the actuator (16) it is possible to induce a changed control position of the control module (8) by which it is possible to induce a changed valve position of the valve module (11),
d) wherein the control module housing part (22) is mounted to the valve module housing part (20),
**characterised in that**
e) a bayonet connection (51) is provided by which the control valve element (15; 36) is held on the control module housing part (22).

2. Compressed air system pilot valve (4) of claim 1, **characterised in that** the bayonet connection (51) is arranged in an inner chamber (29) which is limited by the control module housing part (22) and the valve module housing part (20).

3. Compressed air system pilot valve (4) of claim 2, **characterised in that** in the inner chamber (29) also at least one valve element (19) of the valve module (11) is arranged.

4. Compressed air system pilot valve (4) of one of the preceding claims, **characterised in that** the control valve element (15; 36) comprises a control valve seat (37) which cooperates with the control valve body (14; 42).

5. Compressed air system pilot valve (4) of claim 3 or of claim 4 when referring back to claim 3, **characterised in that** a recess (21) of the valve module housing part (20) is multifunctional **in that**
a) the control module housing part (22) is inserted into the same and
b) the valve body (18) is arranged in the same and/or the valve element (19) is formed by the same or the valve element (19) is held in the same.

6. Compressed air system pilot valve (4) of one of the preceding claims, **characterised in that** at least one component of the control module (8) is supported by a tolerance compensating element (49) on the control module housing part (22).

7. Compressed air system pilot valve (4) of one of the preceding claims, **characterised in that** the control module housing part (22) is held by a bayonet connection (50; 73) on the valve module housing part (20).

8. Compressed air system pilot valve (4) of one of the preceding claims, **characterised in that** the or a bayonet connection (50; 51; 73) comprises at least one inclined surface such that by a change of an assembly angle of the bayonet connection (50; 51; 73) it is possible to change an axial relative position
a) between the control valve element (15; 36) and the control module housing part (22) and/or
b) between the control module housing part (22) and the valve module housing part (20).

9. Compressed air system pilot valve (4) of one of the preceding claims, **characterised in that** an assembly position of the or a bayonet connection (50; 51; 73) can be secured by a securing device (57).

10. Compressed air system pilot valve (4) of claim 9, **characterised in that** by the securing device it is possible to secure different assembly positions of the or a bayonet connection (50; 51; 73).

11. Compressed air system pilot valve (4) of one of the preceding claims, **characterised in that**
a) the control module housing part (22) and the valve module housing part (20) each comprise a housing part inner chamber (23, 26) comprising an opening (25, 27) and
b) the housing part inner chamber (23) of the control module housing part (22) and the housing part inner chamber (26) of the valve module housing part (20) are connected by the openings (25, 27) in a way such that they form the inner chamber (29),
c) wherein
ca) the control valve element (15; 36) and/or
cb) the control valve body (14; 42) and/or
cc) a moveable armature (33) and/or
cd) an electro-magnetic core (32) and/or
ce) the valve body (18) and/or
cf) the valve element (19)
is/are arranged in the inner chamber (29).

12. Compressed air system pilot valve (4) of one of the preceding claims, **characterised in that**
a) the control module housing part (22) and/or
b) the valve module housing part (20) and/or
c) the control valve element (15; 36) and/or
d) the control valve body (14; 42)
are/is made of plastic.

13. Compressed air system pilot valve (4) of one of claims 1 to 12, **characterised in that** the compressed air system pilot valve (4) is embodied
a) as a lift axle valve for an air suspension system of a utility vehicle or
b) as a lifting-lowering-valve (72) of an air suspension system of a utility vehicle or
c) as a brake valve, in particular a trailer brake valve, of a utility vehicle or
d) a valve for an air suspension or
e) a control valve for a pneumatic control of a pneumatic actuator of a throttle flap.

14. Compressed air system pilot valves (4) of different designs, **characterised in that**
a) the compressed air system pilot valves (4) of different designs are each embodied according to one of claims 1 to 12 and
b) in the compressed air system pilot valves (4) of the different designs control modules (8) are present which have the same designs.

## Revendications

1. Soupape pilote d'installation d'air comprimé (4) pour une installation d'air comprimé (1) d'un véhicule utilitaire
a) avec un module de commande (8) qui comprend une partie de boîtier de module de commande (22), un actionneur électromagnétique (16), un corps de soupape de commande (14 ; 42) actionné par l'actionneur électromagnétique et un élément de soupape de commande (15 ; 36), dans lequel le corps de soupape de commande (14 ; 42) et l'élément de soupape de commande (15 ; 36) peuvent prendre, en fonction de l'alimentation électrique de l'actionneur (16), différentes positions de commande relatives dans lesquelles le module de commande (8) contrôle différentes pressions de commande et
b) avec un module de soupape (11) qui comprend une partie de boîtier de module de soupape (20), un corps de soupape (18) et un élément de soupape (19), qui peuvent prendre différentes positions de soupape relatives dans lesquelles le module de soupape (11) relie et/ou bloque différents raccords entre eux,
c) dans lequel le module de soupape (11) est piloté pneumatiquement par le module de commande (8) de sorte qu'une alimentation électrique modifiée de l'actionneur (16) peut provoquer une position de commande modifiée du module de commande (8), par l'intermédiaire de laquelle une position de soupape modifiée du module de soupape (11) peut être provoquée,
d) dans lequel la partie de boîtier de module de commande (22) est fixé à la partie de boîtier de module de soupape (20),
**caractérisée en ce que**
e) une liaison par baïonnette (51) est prévue, par l'intermédiaire de laquelle l'élément de soupape de commande (15 ; 36) est maintenu sur la partie de boîtier de module de commande (22).

2. Soupape pilote d'installation d'air comprimé (4) selon la revendication 1, **caractérisée en ce que** la liaison par baïonnette (51) est disposée dans un espace interne (29) qui est délimité par la partie de boîtier de module de commande (22) et la partie de boîtier de module de soupape (20).

3. Soupape pilote d'installation d'air comprimé (4) selon la revendication 2, **caractérisée en ce que**, dans l'espace interne (29), est disposé également au moins un élément de soupape (19) du module de soupape (11).

4. Soupape pilote d'installation d'air comprimé (4) selon l'une des revendications précédentes, **caractérisée en ce que** l'élément de soupape de commande (15 ; 36) comprend un siège de soupape de commande (37) qui est en interaction avec le corps de soupape de commande (14 ; 42).

5. Soupape pilote d'installation d'air comprimé (4) selon la revendication 3 ou la revendication 4, en référence à la revendication 3, **caractérisée en ce qu'**un évidement (21) de la partie de boîtier de module de soupape (20) est multifonctionnel, car
a) dans celle-ci, est insérée la partie de boîtier de module de commande (22) et
b) dans celle-ci est disposé le corps de soupape (18) et/ou l'élément de soupape (19) est formé par celle-ci ou l'élément de soupape (19) est maintenu dans celle-ci.

6. Soupape pilote d'installation d'air comprimé (4) selon l'une des revendications précédentes, **caractérisée en ce qu'**au moins un composant du module de commande (8) est appuyé contre la partie de boîtier de module de commande (22) par l'intermédiaire d'un élément de compensation des tolérances (49).

7. Soupape pilote d'installation d'air comprimé (4) selon l'une des revendications précédentes, **caractérisée en ce que** la partie de boîtier de module de commande (22) est maintenue sur la partie de boîtier de module de commande (20) par l'intermédiaire d'une liaison par baïonnette (50 ; 73).

8. Soupape pilote d'installation d'air comprimé (4) selon l'une des revendications précédentes, **caractérisée en ce que** la ou une liaison par baïonnette (50 ; 51 ; 73) comprend au moins une surface inclinée, de sorte que, grâce à une modification d'un angle de montage de la liaison par baïonnette (50 ; 51 ; 73), il est possible de modifier une position axiale relative
a) entre l'élément de soupape de commande (15 ; 36) et la partie de boîtier de module de commande (22) et/ou
b) entre la partie de boîtier de module de commande (22) et la partie de boîtier du module de soupape (20).

9. Soupape pilote d'installation d'air comprimé (4) selon l'une des revendications précédentes, **caractérisée en ce qu'**une position de montage de la ou d'une liaison par baïonnette (50 ; 51 ; 73) peut être sécurisée par l'intermédiaire d'un dispositif de sécurisation (57).

10. Soupape pilote d'installation d'air comprimé (4) selon la revendication 9, **caractérisée en ce que**, grâce au dispositif de sécurisation, il est possible de sécuriser différentes positions de montage de la ou d'une liaison par baïonnette (50 ; 51 ; 73).

11. Soupape pilote d'installation d'air comprimé (4) selon l'une des revendications précédentes, **caractérisée en ce que**
a) la partie de boîtier de module de commande (22) et la partie de boîtier de module de soupape (20) comprennent chacune un espace interne de partie de boîtier (23, 26) présentant une ouverture (25, 27) et
b) l'espace interne de partie de boîtier (23) de la partie de boîtier de module de commande (22) et l'espace interne de partie de boîtier (26) de la partie de boîtier de module de soupape (20) sont reliées par l'intermédiaire des ouvertures (25, 27), de sorte que celles-ci constituent l'espace interne (29),
c) dans lequel, dans l'espace interne (29), sont/est disposé
ca) l'élément de soupape de commande (15 ; 36) et/ou
cb) le corps de soupape de commande (14 ; 42) et/ou
cc) un dispositif d'ancrage mobile (33) et/ou
cd) un noyau électromagnétique (32) et/ou
ce) le corps de soupape (18) et/ou
cf) l'élément de soupape (19).

12. Soupape pilote d'installation d'air comprimé (4) selon l'une des revendications précédentes, **caractérisée en ce que**
a) la partie de boîtier de module de commande (22) et/ou
b) la partie de boîtier de module de soupape (20) et/ou
c) l'élément de soupape de commande (15 ; 36) et/ou
d) le corps de soupape de commande (14 ; 42)
sont/est constitué de matière plastique.

13. Soupape pilote d'installation d'air comprimé (4) selon l'une des revendications 1 à 12, **caractérisée en ce que** la soupape pilote d'installation d'air comprimé (4) est conçue
a) comme une soupape d'axe de levage pour une installation de suspension pneumatique d'un véhicule utilitaire ou
b) comme une soupape de levage-abaissement (72) pour une installation de suspension pneumatique d'un véhicule utilitaire ou
c) comme une soupape de freinage, plus particulièrement une soupape de freinage de remorque, d'un véhicule utilitaire ou
d) comme une soupape pour une suspension pneumatique ou
e) comme une soupape de commande pour une commande pneumatique d'un actionneur pneumatique d'un papillon de gaz.

14. Soupapes pilotes d'installation d'air comprimé (4) de différentes conceptions, **caractérisées en ce que**
a) les soupapes pilotes d'installation d'air comprimé (4) de différentes conceptions sont conçues chacune selon l'une des revendications 1 à 12 et
b) dans les soupapes pilotes d'installation d'air comprimé (4) de différentes conceptions, sont prévus des modules de commande (8) identiques.
